# EUROPEAN PATENT APPLICATION

(11) **EP 1 041 361 A2**
(43) Date of publication of application: **04.10.2000**
(21) Application number: 00105121.8
(22) Date of filing: 10.03.2000
(51) Int. Cl.: G01C 15/00

(54) **Tracking system for automatic survey instrument**

(30) Priority: 26.03.1999 JP 8343699
(71) Applicant: KABUSHIKI KAISHA TOPCON, Tokyo-to (JP)
(72) Inventor: Kimura, Akio, c/o Kabushiki Kaisha Topcon, Tokyo-to (JP); Musashi, Ryo-uji, c/o Kabushiki Kaisha Topcon, Tokyo-to (JP); Ishinabe, Ikuo, c/o Kabushiki Kaisha Topcon, Tokyo-to (JP)
(74) Representative: LOUIS, PÖHLAU, LOHRENTZ & SEGETH

(57) **Abstract**

The tracking system for an automatic survey instrument according to the present invention comprises a beam emitting unit for emitting a linearly polarized tracking beam, a photodetection unit, a tracking beam optical system (31) for projecting the tracking beam from the beam emitting unit and for guiding an incident beam toward the photodetection unit, a splitting means (33) for allowing to pass the tracking beam from the tracking optical system and for directing said incident beam toward the photodetection unit, a first polarizing optical member (42) for changing the tracking beam projected from the tracking optical system to a circularly polarized beam, and a second polarizing optical member (43) which is disposed in the photodetection unit and selectively allows to pass the incident beam.

## Description

### BACKGROUND OF THE INVENTION

The present invention relates to a tracking system for an automatic survey instrument for automatically tracking a target, and in particular, to a tracking system for an automatic survey instrument provided with a telescopic optical system for dividing a reflection light beam to a tracking beam, a range-finding beam and a visible beam.

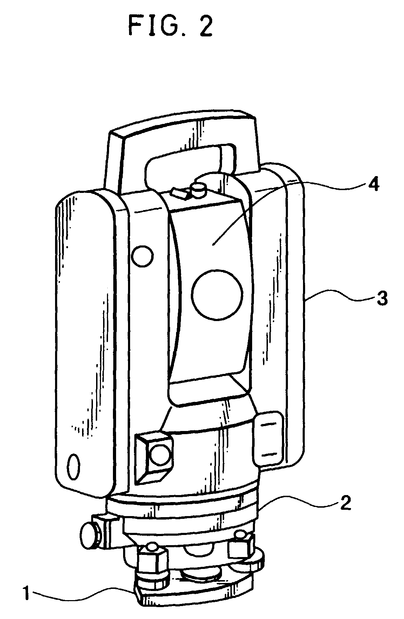

Fig. 2 shows an essential portion of an automatic survey instrument. Like a general-type survey instrument, the automatic survey instrument comprises a leveling unit 1 mounted on a tripod, a base unit 2 mounted on the leveling unit 1, a base stand 3 rotatably mounted around a vertical axis on the base unit 2, and a telescopic unit 4 rotatably mounted around a horizontal axis on the base stand 3. Further, in the automatic survey instrument, the base stand 3 and the telescopic unit 4 are rotated and driven by a built-in motor (not shown) so that the instrument can be remotely or automatically controlled.

The telescopic unit 4 comprises, in addition to a collimating optical system, a range-finding optical system and a tracking optical system for projecting a measuring beam including a range-finding beam and a tracking beam and receiving a beam reflected from a target object. Further, there are provided a collimating means for collimating the target object based on the received reflection beam, a tracking means for detecting and tracking the target object, and a range-finding means for measuring a distance to the target object.

The measuring beam projected from the telescopic unit 4 is reflected by a mirror arranged on the target object. By receiving the reflection beam, a surveyor performs collimation of the survey instrument to the target object or measures the distance, or automatically tracks the target object.

In the automatic survey instrument, the range-finding optical system, the tracking optical system and the collimating optical system are integrated so that no collimation error occurs when survey operation is carried out at near distance.

In the survey instrument for automatically tracking the target as described above, the projected measuring beam includes light components of different wavelength ranges used for different purposes of tracking and range-finding. The reflection beam received and reflected by the target object is divided into each wavelength range based on the each purpose such as tracking, range-finding or collimation. Using the range-finding beam and the tracking beam thus divided, distance measurement or automatic tracking are performed. The wavelength division is performed by an optical means arranged on an optical path of the optical system of the telescopic unit 4. As the optical means for dividing the beam to a plurality of wavelength ranges, a dichroic prism is used in most cases.

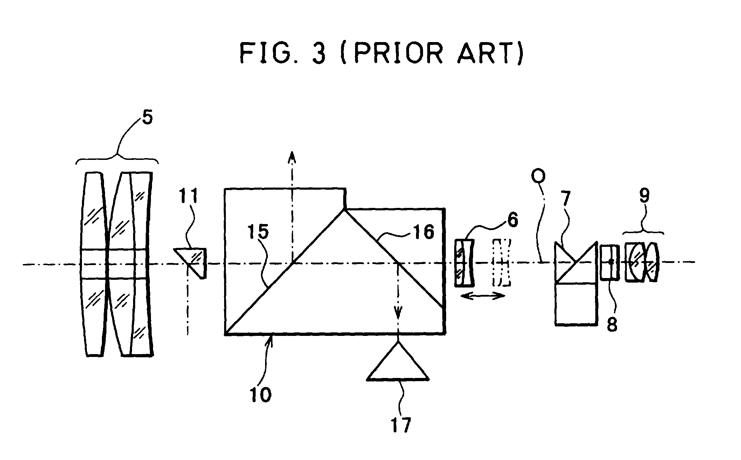

Now, referring to Fig. 3, description will be given on an optical system of a conventional type automatic survey instrument, which is provided with an optical means for dividing the beam into three beams with different wavelengths.

The optical system comprises an objective lens 5, a focusing lens 6, an erect prism 7, a focusing mirror 8, and an ocular lens 9. The optical means, i.e. a dichroic prism 10, is provided between the objective lens 5 and the focusing lens 6, and a reflection mirror 11 for projecting the tracking beam is arranged between the objective lens 5 and the dichroic prism 10.

The focusing lens 6 is designed as movable along an optical axis O, and the laser beam entering through the objective lens 5 forms an image on the focusing mirror 8. The erect prism 7 turns the image from the focusing mirror 8 to an erect image. The focusing mirror 8 has a scale for catching the target object on the collimation center. From the focused image on the focusing mirror 8, the ocular lens 9 further forms an image of the target object together with the scale on a retina of the surveyor. On the reflection beam optical axis of the reflection mirror 11, a tracking optical system (not shown) is arranged, and the laser beam of the tracking beam is projected to the target object via the reflection mirror 11.

The dichroic prism 10 comprises two dichroic mirror surfaces, i.e. a first dichroic mirror surface 15 and a second dichroic mirror surface 16, both traversing the optical path. At a position facing to the first dichroic mirror surface 15, a tracking beam receiving unit (not shown) is disposed. At a position facing to the second dichroic mirror surface 16, a received and emitted beam splitting mirror 17 of the range-finding optical system is arranged. The range-finding optical system projects a laser beam for distance measurement to the target object via the received and emitted beam splitting mirror 17 and receives a reflection laser beam for range-finding through the received and emitted beam splitting mirror 17.

As described above, the projected measuring beam includes light components of different wavelength ranges each used for different purposes of collimation, tracking and range-finding. Among the light components of these different wavelength ranges, for example, a visible light of 400 - 650 nm is used for collimation, an infrared light of 650 nm is used for tracking, and an infrared light of 800 nm is used for range-finding.

Among the reflection light beams entering from the objective lens 5, the tracking reflection beam is reflected by the first dichroic mirror surface 15, and the tracking beam is separated from the range-finding beam and visible beam. The tracking beam photodetection unit receives the tracking reflection beam. Based on the result of photodetection, a control unit (not shown) of the automatic survey instrument main unit drives a motor and automatically adjusts the position so that the target object is positioned at the collimation center of the survey instrument.

After the laser beam passes through the first dichroic mirror surface 15, the range-finding beam is further reflected by the second dichroic mirror surface 16, and the range-finding beam is separated from the visible beam. The range-finding beam thus separated is received by the range-finding optical system, and the distance is measured. The visible beam passing through the second dichroic mirror surface 16 is observed by the surveyor through the ocular lens 9, and the collimation at the time of the installation of the automatic survey instrument and the collimation at the time of the measurement are performed.
In the automatic survey instrument as described above, the dichroic prism 10 divides the beam components to different wavelength ranges of visible beam, tracking beam and range-finding beam. Thus, the dichroic prism divides the reflection beam entering on the optical axis of the telescopic unit 4 sequentially to the tracking reflection beam, the range-finding reflection beam and the visible beam. The dichroic prism 10 must have the first dichroic mirror surface 15 and the second dichroic mirror surface 16 each having such size as necessary for receiving the light beam passing through the objective lens 5 and also having such length as necessary for reflecting the tracking reflection beam and the range-finding beam. For this reason, the dichroic prism 10 must be necessarily designed in considerable size. The dichroic prism 10 in large size is expensive in cost, and the telescopic unit 4 must be also designed in larger size. When a large-size telescopic unit 4 is used, a part of electric circuits in electrical system and range-finding system must be provided on the base stand unit 3, and this means the survey instrument itself must be designed larger and heavier. With the increase of the weight, driving electric power must be increased, and additional power sources should be provided.

Further, it has been practiced in recent years to increase the spreading of the tracking light beam in order to enlarge the scope of searching and tracking. When the spreading of the tracking light beam is increased, reflection on the surface of internal optical components and internal reflection are increased to a great extent. When it is tried to design the optical system in compact size and to produce the automatic survey instrument in smaller size, light beams may pass through many optical components, and this may lead to further increase of internal reflection.

### SUMMARY OF THE INVENTION

It is an object of the present invention to provide a system, by which it is possible to design the optical means including a collimating optical system and a tracking optical system in smaller size, to reduce the manufacturing cost of the optical means, to design an automatic survey instrument in smaller size, to decrease internal reflection, and to improve measurement accuracy.

To attain the above object, the tracking system for an automatic survey instrument according to the present invention comprises a beam emitting unit for emitting a linearly polarized tracking beam, a photodetection unit, a tracking beam optical system for projecting the tracking beam from the beam emitting unit and for guiding an incident beam toward the photodetection unit, a splitting means for allowing to pass the tracking beam from the tracking optical system and for directing the incident beam toward the photodetection unit, a first polarizing optical member for changing the tracking beam projected from the tracking optical system to a circularly polarized beam, and a second polarizing optical member which is disposed in the photodetection unit and selectively allows to pass the incident beam. Further, the present invention provides the tracking system for an automatic survey instrument as described above, wherein the splitting means is an aperture mirror, and the tracking beam passes through an aperture of the aperture mirror. Also, the present invention provides the tracking system for an automatic survey instrument as described above, wherein the first polarizing optical member is a 1/4 λ birefringence member. Further, the present invention provides the tracking system for an automatic survey instrument as described above, wherein the second polarizing optical member is arranged in such manner that a direction of polarization of transmitted polarized beam crosses perpendicularly a direction of a linearly polarized tracking beam projected from the light emitting unit. Also, the present invention provides the tracking system for an automatic survey instrument as described above, wherein the aperture of the aperture mirror allows to pass the tracking beam and also allows to pass a reflection beam from a plane of an optical member on an optical axis of the projected beam. Further, the present invention provides the tracking system for an automatic survey instrument as described above, wherein there is provided a relay lens for varying a spreading of the projected tracking beam on the beam emitting unit. Also, the present invention provides a tracking system for an automatic survey instrument, which comprises an objective lens, a focusing lens, and an optical means, the optical means being positioned on an optical axis between the objective lens and the focusing lens and having a first reflection surface at least allowing to pass a visible beam, a second reflection surface for allowing to pass at least a beam component of a predetermined wavelength, a reflection beam from the first reflection surface reaches a reflection surface of the second reflection surface, and an optical axis of a reflection beam from the second reflection surface crosses the optical axis, further there is provided a tracking optical system arranged on the reflection beam optical axis, wherein the tracking optical system comprises a tracking beam source arranged on the reflection beam optical axis and emits a polarized laser beam, a beam splitting means, a photodetection unit for receiving light beam from the beam splitting means through a polarizing plate, and a 1/4 λ birefringence member arranged on the reflection beam optical axis.

### BRIEF DESCRIPTION OF THE DRAWINGS

Fig. 1 is a block diagram showing an essential portion of an embodiment for the present invention;
Fig. 2 is an external view of an essential portion of an automatic survey instrument; and
Fig. 3 is a block diagram of an essential portion of a conventional example.

### DETAILED DESCRIPTION OF THE PREFERRED EMBODIMENT

In the following, description will be given on an embodiment of the present invention referring to the drawings.

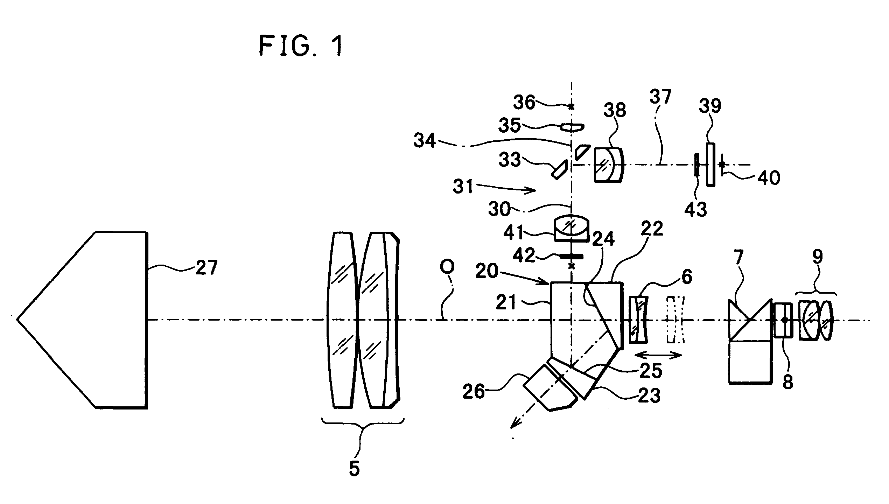

In Fig. 1, the same component as shown in Fig. 3 is referred by the same symbol, and detailed description is not given here.

An objective lens 5, a focusing lens 6, an erect prism 7, a focusing mirror 8, and an ocular lens 9 are arranged in this order on an optical axis O, and an optical means, preferably, a dichroic prism 20, is arranged between the objective lens 5 and the focusing lens 6.

The dichroic prism 20 is designed in such manner that wedge-like prisms 22 and 23 are attached on opposed surfaces of a pentagonal prism 21 to form a first dichroic mirror surface 24 and a second dichroic mirror surface 25.

The first dichroic mirror surface 24 allows to pass a visible beam of incident reflection light beams and reflects an infrared beam. The second dichroic mirror surface 25 allows to pass a range-finding beam and reflects a tracking beam. On the optical axis of reflection beam reflected from the first dichroic mirror surface 24, a range-finding optical system (not shown) is disposed, and a tracking optical system 31 is arranged on a tracking beam optical axis 30 of the beam reflected by the second dichroic mirror surface 25.

In the figure, reference numeral 26 indicates a received and emitted beam splitting mirror of the range-finding optical system, and it is installed in a transverse direction so that light beams are split in a direction perpendicular to paper surface. Reference numeral 27 represents a target object, and a corner cube is used as the target object in the present embodiment.

The first dichroic mirror surface 24 allows to pass, for example, the visible beam of 400 - 650 nm and reflects the infrared beam of 650 - 850 nm. The second dichroic mirror surface 25 reflects the infrared beam of 650 - 720 nm, while it allows to pass the infrared beam of 720 - 850 nm.

Only the first dichroic mirror surface 24 may be used as the dichroic mirror surface arranged on the optical axis O, and the other second dichroic mirror surface 25 is at a position deviated from the optical axis O. For this reason, the dimension of the dichroic prism 20 in the direction of the optical axis is shortened. Therefore, by arranging the dichroic prism 20 at a position closer the focusing lens 6, it is possible to increase the distance between the dichroic prism 20 and the objective lens 5. As a result, a diameter of the laser beam entering the dichroic prism 20 becomes shorter, and the dichroic prism 20 can be designed in smaller size.

Next, the tracking optical system 31 will be described.
An aperture mirror 33 is disposed on the tracking beam optical axis 30, and a tracking beam source 36 for emitting laser beam for tracking is arranged on an optical axis 34 of the transmission beam coming from the aperture mirror 33 via a relay lens 35. A semiconductor laser for emitting linearly polarized laser beam is used as the tracking beam source 36. The relay lens 35 is supported by a light beam adjusting means (not shown), and it is movable along the optical axis so that the spreading of the tracking laser beam can be adjusted.

On an optical axis 37 of the reflection beam from the aperture mirror 33, a relay lens 38, a band-pass filter 39, and a photodetection element 40 are arranged. The band-pass filter 39 allows to pass the beam component in wavelength range of the tracking beam. The photodetection element 40 is, for example, a quadrisected (4-division) photodetection element. Based on photodetection ratio of the division photodetection element, it is possible to detect photodetecting position of the photodetection element 40.

A relay lens 41 is provided between the pentagonal prism 21 and the aperture mirror 33, and a 1/4 λ birefringence member 42 is disposed between the relay lens 41 and the pentagonal prism 21. A polarizing plate 43 is disposed between the relay lens 38 and the band-pass filter 39. The semiconductor laser, serving as the tracking beam source 36, emits almost linearly polarized laser beam. If it is supposed that this laser beam is the horizontally polarized beam, the polarizing plate 43 is designed to pass the vertically polarized beam. The horizontally polarized beam and the vertically polarized beam have oscillating directions deviated by 90°from each other.

The aperture mirror 33 may be other type of a reflection member, for example, a half-mirror. The position where the 1/4 λ birefringence member 42 is arranged may be between the aperture mirror 33 and the relay lens 41 or may be between the objective lens 5 and the pentagonal prism 21.

Next, description will be given on operation.

The measuring beam is emitted from the range-finding optical system (not shown), and the tracking beam is emitted from the tracking beam source 36. The laser beam emitted from the tracking beam source 36 is linearly polarized beam. Spreading of the tracking laser beam is variably adjusted by the relay lens 35, and the light beam passes through the aperture of the aperture mirror 33. After passing through the relay lens 41, the tracking laser beam enters the 1/4 λ birefringence member 42 and is changed to circularly polarized beam. Then, it is reflected by the pentagonal prism 21 and is projected to the corner cube 27 through the objective lens 5.

As described above, the relay lens 35 adjusts the spreading of the projected tracking laser beam. In case the corner cube 27 is at a near distance, the relay lens 35 is placed closer to the tracking beam source 36 to widen the spreading and to facilitate detection of the corner cube 27. If the corner cube 27 is at a long distance, the relay lens 35 is positioned relatively far from the tracking beam source 36 to decrease the spreading of the light beam and to increase the reaching distance of the tracking laser beam.

When the reflected measuring beam including the tracking reflection beam reflected by the corner cube 27 enters the objective lens 5, the infrared light beams, i.e. the tracking reflection beam and the range-finding reflection beam, are reflected by the first dichroic mirror surface 24, while the visible beam passes through it. The transmitted visible beam forms an image on the focusing mirror 8 by the focusing lens 6. The image thus formed is further focused on a retina of a surveyor together with the scale of the focusing mirror 8 by the ocular lens 9, and the collimation is performed.

The first dichroic mirror surface 24 and the second dichroic mirror surface 25 are so designed as to split the beam into two parts at predetermined wavelengths, and an optical film formed is simple and is obtained at low cost. Further, the dichroic mirror surface selects wavelength and allows to pass the beam of the selected wavelength, while it reflects the other beam components, but it does not transmit the beam completely. Therefore, when the beam passes through the dichroic mirror surface by two or more times, attenuation effect increases, and the amount of the transmitting beam is decreased. According to the present invention, the light passes through the first dichroic mirror surface 24 only once. This means that the amount of transmission beam is higher, and the more distinct and clear collimation can be performed.

On the second dichroic mirror surface 25, among the infrared light beams reflected by the first dichroic mirror surface 24, only the tracking beam is reflected, while the therange-finding beam is allowed to pass. After passing through the second dichroic mirror surface 25, the range-finding reflection beam is received by a range-finding optical system (not shown), and the distance is measured.

The tracking reflection beam entering the objective lens 5 is reflected by the second dichroic mirror surface 25 of the pentagonal prism 21 in a direction, which runs perpendicularly to the optical axis O and passes through the 1/4 λ birefringence member. By passing through the 114 λ birefringence member 42, the tracking beam is changed to linearly polarized light, which has a direction of polarization deviated by 90°from that of the laser beam emitted from the tracking beam source 36.

After being reflected by the aperture mirror 33, the tracking reflection beam is converged on the photodetection element 40 by the relay lens 38. In the process to converge on the photodetection element 40, the beam passes through the polarizing plate 43 and the band-pass filter 39. Here, the tracking beam reflected by the surface of the relay lens 41 is the linearly polarized beam running in the same direction as the laser beam emitted from the tracking beam source 36. The polarizing plate 43 is designed to have a direction of polarization of the transmitting polarized beam by 90°deviated from that of the laser beam emitted from the tracking beam source 36, and the reflection beam from the surface of the relay lens 41 is cut off by the polarizing plate 43. Therefore, the laser beam reflected by the surface of the relay lens 41 does not reach the photodetection element 40. There are reflection light beams reflected by a surface of the pentagonal prism 21 opposite to the relay lens 41, but the reflection beam from the pentagonal prism 21 is limited by a diameter of the aperture when it passes through the aperture of the aperture mirror 33, and this prevents the reflection by the aperture mirror 33. The band-pass filter 39 cuts off disturbance light other than the tracking reflection beam, and this increases detection accuracy of the tracking reflection beam on the photodetection element 40.

The reflection light optical axis of the second dichroic mirror surface 25 may be or may not be on the same plane as the optical axis O.

As described above, it is possible according to the present invention to eliminate internal reflection in the tracking optical system. This makes it possible to widen the spreading of the tracking beam and to enlarge the scope of tracking. Also, it is possible to design the optical system in compact size and to the produce the device in smaller size.

## Claims

1. A tracking system for an automatic survey instrument, comprising a beam emitting unit for emitting a linearly polarized tracking beam, a photodetection unit, a tracking beam optical system for projecting said tracking beam from said beam emitting unit and for guiding an incident beam toward said photodetection unit, a splitting means for allowing to pass said tracking beam from said tracking optical system and for directing said incident beam toward said photodetection unit, a first polarizing optical member for changing said tracking beam projected from said tracking optical system to a circularly polarized beam, and a second polarizing optical member which is disposed in said photodetection unit and selectively allows to pass said incident beam.

2. A tracking system for an automatic survey instrument according to claim 1, wherein said splitting means is an aperture mirror, and said tracking beam passes through an aperture of said aperture mirror.

3. A tracking system for an automatic survey instrument according to claim 1, wherein said first polarizing optical member is a 1/4 λ birefringence member.

4. A tracking system for an automatic survey instrument according to claim 1, wherein said second polarizing optical member is arranged in such manner that a direction of polarization of transmitted polarized beam crosses perpendicularly a direction of a linearly polarized tracking beam projected from said light emitting unit.

5. A tracking system for an automatic survey instrument according to claim 2, wherein said aperture of said aperture mirror allows to pass said tracking beam and also allows to pass a reflection beam from a plane of an optical member on an optical axis of said projected beam.

6. A tracking system for an automatic survey instrument according to claim 1, wherein there is provided a relay lens for varying a spreading of said projected tracking beam on said beam emitting unit.

7. A tracking system for an automatic survey instrument, comprising an objective lens, a focusing lens, and an optical means, said optical means being positioned on an optical axis between said objective lens and said focusing lens and having a first reflection surface at least allowing to pass a visible beam, a second reflection surface for allowing to pass at least a beam component of a predetermined wavelength, a reflection beam from said first reflection surface reaches a reflection surface of said second reflection surface, and an optical axis of a reflection beam from said second reflection surface crosses said optical axis, further there is provided a tracking optical system arranged on said reflection beam optical axis, wherein said tracking optical system comprises a tracking beam source arranged on said reflection beam optical axis and emits a polarized laser beam, a beam splitting means, a photodetection unit for receiving light beam from said beam splitting means through a polarizing plate, and a 1/4 λ birefringence member arranged on said reflection beam optical axis.
